# EUROPEAN PATENT APPLICATION

(11) **EP 4 848 159 A1**
(43) Date of publication of application: **02.12.2026**
(21) Application number: 24920276.3
(22) Date of filing: 18.10.2024
(51) Int. Cl.: G06N 20/00, B05D 3/00, C09D 201/00

(54) **COATING FILM CHARACTERISTIC ESTIMATION METHOD AND COATING FILM CHARACTERISTIC ESTIMATION MODEL GENERATION METHOD**

(30) Priority: 24.01.2024 JP 2024008766
(71) Applicant: Kansai Paint Co., Ltd., Amagasaki-shi, Hyogo 661-8555 (JP)
(72) Inventor: KOMATSUDA Shio, Hiratsuka-shi, Kanagawa 254-8562 (JP); AKAHANE Junji, Miyoshi-shi, Aichi 470-0206 (JP)
(74) Representative: Santarelli
(86) International application number: PCT/JP2024/037204
(87) International publication number: WO 2025/158729

(57) **Abstract**

A coating film characteristic estimation method includes: using a machine learning model that has been trained with variables including information on coating conditions, paint properties, a paint formulation, coating film characteristic measurement conditions, and coating film characteristic measurement results, to cause the machine learning model to output an estimated value of the coating film characteristic measurement results by inputting, to the machine learning model, the information on the coating conditions, the paint properties, the paint formulation, and the coating film characteristic measurement conditions.

## Description

### TECHNICAL FIELD

The present invention relates to a coating film characteristic estimation method and a coating film characteristic estimation model generation method. Priority is claimed on Japanese Patent Application No. 2024-008766, filed January 24, 2024, the content of which is incorporated herein by reference.

### BACKGROUND ART

In coating of vehicles and components thereof, a multilayer coating film is usually formed by sequentially performing electrodeposition coating, intermediate coating, base coating, and clear coating on an object to be coated.

As a result of the coating, coating film characteristics such as smoothness and gloss are imparted to the coated object. Since the coating film characteristics are closely related to the appearance and function of the coating film, it is very important to understand the coating film characteristics.

However, since the coating film characteristics vary in a complex manner depending on the combination of paints used, the type of object being coated, coating conditions, and the like, it is difficult to estimate the coating film characteristics before performing the coating. Therefore, in order to know the coating film characteristics, it is necessary to actually produce paints and perform the coating, which has a problem of an enormous amount of work time.

### Citation List

### Patent Document

Patent Document 1: Japanese Unexamined Patent Application, First Publication No. 2021-140420

### SUMMARY OF INVENTION

### Technical Problem

An object of the present invention is to provide a coating film characteristic estimation method and a coating film characteristic estimation model generation method capable of estimating coating film characteristics before coating is performed.

### Solution to Problem

According to an aspect of the present invention, there is provided a coating film characteristic estimation method including: using a machine learning model that has been trained with variables including information on coating conditions, paint properties, a paint formulation, coating film characteristic measurement conditions, and coating film characteristic measurement results, to cause the machine learning model to output an estimated value of the coating film characteristic measurement results by inputting, to the machine learning model, the information on the coating conditions, the paint properties, the paint formulation, and the coating film characteristic measurement conditions. Advantageous Effects of Invention

According to the present invention, it is possible to estimate coating film characteristics before coating is performed.

### BRIEF DESCRIPTION OF DRAWINGS

[FIG. 1] A diagram showing an example of a configuration of a coating film characteristic estimation model generation device 10 according to a first embodiment.
[FIG. 2] A flowchart showing an operation of the coating film characteristic estimation model generation device 10 according to the first embodiment.
[FIG. 3] A diagram showing an example of a configuration of a coating film characteristic estimation device 20 according to the first embodiment.
[FIG. 4] A flowchart showing an operation of the coating film characteristic estimation device 20 according to the first embodiment.
[FIG. 5] A diagram showing datasets in second to fourth embodiments.

### DESCRIPTION OF EMBODIMENTS

Hereinafter, embodiments of the present invention will be described in detail with reference to the accompanying drawings.

### (First Embodiment)

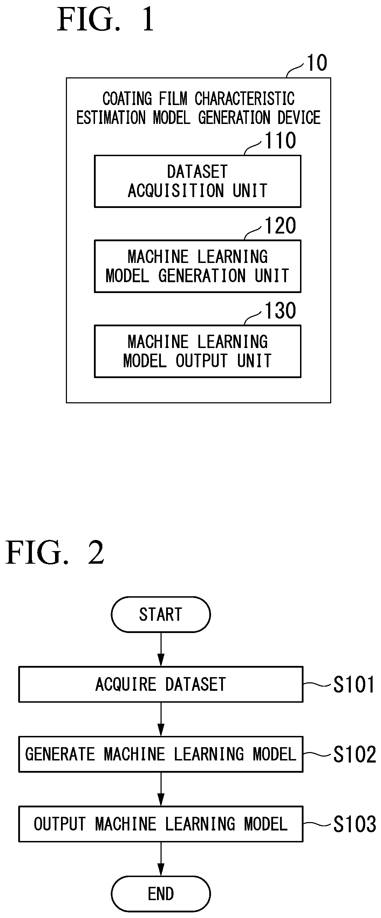

FIG. 1 is a diagram showing an example of a configuration of a coating film characteristic estimation model generation device 10 according to a first embodiment.

The coating film characteristic estimation model generation device 10 includes a dataset acquisition unit 110, a machine learning model generation unit 120, and a machine learning model output unit 130.

The dataset acquisition unit 110 acquires a dataset. The dataset includes, as variables, information on coating conditions, paint properties, a paint formulation, coating film characteristic measurement conditions, and coating film characteristic measurement results. Hereinafter, the coating conditions and the paint properties may be collectively referred to as test conditions.

It is preferable that the coating film characteristics to be estimated include at least one of smoothness, gloss, or color.

Smoothness can be measured using Wave-scan, Wave-scan dual (both manufactured by BYK Gardner), or the like. Smoothness is represented by amplitude in a specific wavelength range. In a case where smoothness is measured using Wave-scan, smoothness is represented in six stages of dullness/Wa/Wb/Wc/Wd/We, or in two stages of SW/LW.

Gloss is also referred to as luster or gloss, and can be measured using micro-tri-gloss (manufactured by BYK Gardner) or the like. In a case where gloss is measured using micro-tri-gloss, gloss at three angles of 20°, 60°, and 85° can be measured. In the present embodiment, among these, it is preferable to include information at 20° and 60°.

Color is measured using a multi-angle spectrophotometer, and can be measured using BYK-Mac i (manufactured by BYK), MA-68II (manufactured by X-Rite), or the like. Examples of data related to color include data representing lightness, chroma, and hue, or data from which color can be identified by calculation. For example, the data can be based on a color system such as an XYZ color system (X, Y, and Z values), an RGB color system, an L*a*b* color system (L*, a*, and b* values), a Hunter Lab color system (L, a, and b values), an L*C*h color system (L*, C*, and h values) defined in CIE (1994), or a Munsell color system (H, V, and C values). Among these, it is preferable to include data based on the L*a*b* color system or the L*C*h color system. In a case where color is measured using BYK-Mac i, color measurement can be performed at six angles of -15°, 15°, 25°, 45°, 75°, and 110°. In a case where color is measured using MA-68II, color measurement can be performed at five angles of 15°, 25°, 45°, 75°, and 110°. In the present embodiment, it is preferable to include color information at three angles of 25°, 45°, and 75°.

It is preferable that the coating film characteristics to be estimated are characteristics of a multilayer coating film formed by sequentially performing intermediate coating, base coating, and clear coating.

The coating conditions are conditions related to a coating operation. In the present embodiment, it is preferable that the information on the coating conditions includes at least one selected from the group consisting of a paint type, a coating film configuration, coating booth temperature and humidity, a discharge rate, a gun speed, a film thickness, and baking conditions, which vary depending on a coating process.

The coating process includes, for example, at least one of an intermediate paint coating process, a base paint coating process, and a clear paint coating process.

The paint type includes information on the number of types of paints used in each coating process.

The coating film configuration includes information on the number of times each paint is applied (the number of layers) in each coating process.

The coating booth temperature and humidity refer to a temperature and a humidity in a booth used for coating in each coating process, and may include, as a variable, an amount of water vapor in the booth calculated from the temperature and the humidity.

The discharge rate is an amount of the paint discharged per unit time from a coating machine used for coating in each coating process.

The gun speed is a speed at which the coating machine used for coating in each coating process moves during coating.

The film thickness is a thickness of the coating film after the paint is applied and dried in each coating process.

The baking conditions refer to whether or not to perform baking after the paint is applied in each coating process and/or heating conditions for baking and drying to form a coating film. As the baking conditions, variables typically used include a setting time until the coating film is placed in a heat drying oven after coating, a temperature during setting, a time during which the coating film is placed in the heat drying oven, a temperature of the heat drying oven, a direction of a surface of the coating film during setting and heat drying (horizontal or vertical), and the like. Among these, it is preferable to include at least one or more of the direction of the surface of the coating film during coating, setting, and heat drying (horizontal or vertical) as a variable, it is more preferable to include at least one or more of the direction of the surface of the coating film during setting and heat drying as a variable, and it is particularly preferable to include both the direction of the surface of the coating film during setting and heat drying as a variable.

The above-described coating conditions are often different depending on the type of coating film to be formed, and need to be set for each coating process. Specifically, for example, coating conditions for an intermediate coating process, coating conditions for a base coating process, and coating conditions for a clear coating process are each input as variables.

The paint properties are specific numerical values related to the paint, and preferably include at least one of a viscosity and a solid content concentration.

The viscosity can be used without limitation as long as it is measured by a known method in the related art. However, for an intermediate paint and a base paint, it is preferable to use viscosity measured using a B-type rotational viscometer, and for a clear paint, it is preferable to use viscosity measured with a Ford cup.

The viscosity measured using the B-type rotational viscometer is defined as a viscosity 1 minute after the start of measurement under certain conditions. Specifically, measurement is started using the B-type viscometer at 6 rpm at a temperature of 20°C, and the viscosity is defined as a viscosity 1 minute after the start (this is also referred to as a "B6 value" in this specification). In addition, measurement may be started using the B-type viscometer at 60 rpm at a temperature of 20°C, and the viscosity may be defined as a viscosity 1 minute after the start (this is also referred to as a "B60 value" in this specification). In this case, the viscometer used is LVDV-I (trade name, manufactured by Brookfield Engineering Laboratories, Inc., B-type viscometer).

In addition, the viscosity may include a "Ti value (thixotropic index)" as a variable. The "Ti value (thixotropic index)" is described in JIS K 5101-6-2 (2004), Test Methods for Pigments, Section 2, Rotational Viscometer Method, and can be obtained by measuring viscosities (mPa·s) at 20°C and rotation speeds of 6 rpm and 60 rpm using the B-type viscometer, and calculating a value of "viscosity measurement value at 6 rpm/viscosity measurement value at 60 rpm".

The solid content concentration means a concentration of a residue remaining after volatile components are removed, and the residue may be in a solid state or a liquid state at room temperature. For example, the solid content concentration can be calculated by measuring the amount of remaining components when a sample is subjected to a heat treatment at 105°C for 3 hours to remove volatile components.

Since the paint properties described above generally differ depending on paint, it is necessary to set the paint properties for each coating process in the case of a multilayer process. Specifically, for example, the paint properties of the intermediate paint, the paint properties of the base paint, and the paint properties of the clear paint are each input as variables.

The paint formulation refers to components constituting a paint and the amounts thereof. Examples of the components constituting a paint include a resin, a pigment, a solvent, and an additive.

Among these, the information on the paint formulation preferably includes information on a pigment type and information on an amount thereof, and particularly preferably includes information on at least one of a size of an effect pigment, a color of the effect pigment, a color of a coloring pigment, and a chemical structure of the coloring pigment.

Since the paint formulation described above differs depending on paint, it is necessary to set the paint formulation for each coating process in the case of a multilayer process. Specifically, for example, the information on the paint formulation includes information on a formulation of an intermediate paint, information on a formulation of a base paint, and information on a formulation of a clear paint. In the intermediate coating process, the base coating process, and the clear coating process, two or more types of paints may be applied in a multilayer manner in one step, and in this case, it is preferable to input information for each paint. In the present embodiment, from the viewpoint of improving prediction accuracy, the information on the paint formulation preferably includes information on the formulation of the base paint.

The information on the coating film characteristic measurement conditions is information on conditions in a case of measuring the coating film characteristics. In a case where the coating film characteristic to be estimated is smoothness, information such as an instrument used, a measurement target wavelength, and the like is input, and in a case where the coating film characteristics are gloss and color, information such as an instrument used, a measurement angle, and the like is input.

The coating film characteristic measurement results are results obtained by measuring coating film characteristics of coating films coated under the above-described coating conditions, the above-described paint properties, and the above-described paint formulation, and the measurement results corresponding to the above-described coating film characteristic measurement conditions are input.

The information included in the dataset may be processed by a computer or the like.

The machine learning model generation unit 120 generates a machine learning model based on the dataset. The machine learning model is a model that outputs an estimated value of the coating film characteristic measurement result when the information on the coating conditions, the paint properties, the paint formulation, and the coating film characteristic measurement conditions is input. The machine learning model generation unit 120 generates a machine learning model using the information on the coating conditions, the paint properties, the paint formulation, and the coating film characteristic measurement conditions as explanatory variables and using the coating film characteristic measurement results as an objective variable.

Examples of an algorithm of the machine learning model include a decision tree, a decision tree using gradient boosting, linear regression, logistic regression, a simple perceptron, an MLP, a neural network, a support vector machine, a random forest, a Gaussian process, a Bayesian network, a k-nearest neighbor method, Ridge regression, Lasso regression, a graph neural network, a K-means method, naive Bayes, a CNN, and other algorithms used in machine learning. These algorithms may be used alone or in combination of a plurality of algorithms. In the present invention, it is preferable to use a decision tree using gradient boosting.

The machine learning model output unit 130 outputs the generated machine learning model.

FIG. 2 is a flowchart showing an operation of the coating film characteristic estimation model generation device 10 according to the first embodiment. The dataset acquisition unit 110 acquires a dataset (step S101). The machine learning model generation unit 120 generates a machine learning model based on the dataset (step S102). The machine learning model output unit 130 outputs the generated machine learning model (step S103).

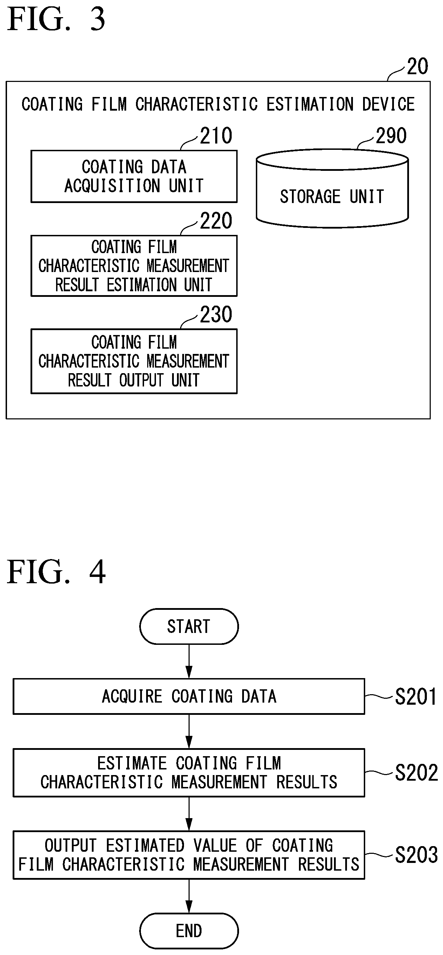

FIG. 3 is a diagram showing an example of a configuration of a coating film characteristic estimation device 20 according to the first embodiment. The coating film characteristic estimation device 20 includes a coating data acquisition unit 210, a coating film characteristic measurement result estimation unit 220, a coating film characteristic measurement result output unit 230, and a storage unit 290. The storage unit 290 stores the machine learning model output by the coating film characteristic estimation model generation device 10.

The coating data acquisition unit 210 acquires coating data. The coating data includes the coating conditions, the paint properties, the paint formulation, and the coating film characteristic measurement conditions, which are the explanatory variables of the machine learning model.

The coating film characteristic measurement result estimation unit 220 estimates coating film characteristic measurement results by inputting the coating data to the machine learning model and causing the machine learning model to output an estimated value of the coating film characteristic measurement results.

The coating film characteristic measurement result output unit 230 outputs the estimated value of the coating film characteristic measurement results output by the machine learning model. The estimated value of the coating film characteristic measurement results output from the coating film characteristic measurement result output unit 230 is recorded on the storage unit 290, for example, together with the corresponding coating data. The estimated value of the coating film characteristic measurement results output from the coating film characteristic measurement result output unit 230 is input to and displayed on, for example, an external display device.

FIG. 4 is a flowchart showing an operation of the coating film characteristic estimation device 20 according to the first embodiment. The coating data acquisition unit 210 acquires the coating data (step S201). The coating film characteristic measurement result estimation unit 220 estimates coating film characteristic measurement results using the machine learning model based on the coating data (step S202). The coating film characteristic measurement result output unit 230 outputs an estimated value of the coating film characteristic measurement results (step S203).

As described above, the coating film characteristic estimation device 20 can estimate the coating film characteristic measurement results before performing the coating by estimating the coating film characteristic measurement results from the coating conditions, the paint properties, and the paint formulation using the machine learning model.

### (Second Embodiment)

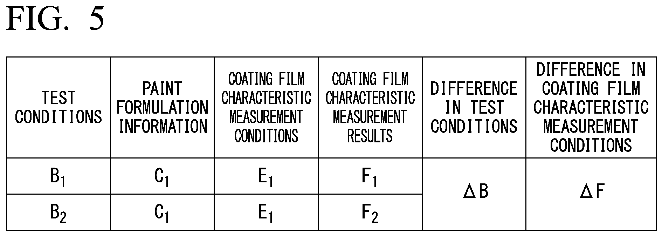

Hereinafter, the coating film characteristic estimation model generation device 10 according to a second embodiment will be described. In the second embodiment, a dataset acquired by the dataset acquisition unit 110 includes, in addition to the dataset in the first embodiment, a difference in test conditions and a difference in coating film characteristic measurement results corresponding to the difference in the test conditions in a case where the paint formulation and the coating film characteristic measurement conditions are the same. FIG. 5 is a diagram showing the dataset in the second embodiment.

The dataset includes test conditions B₁ and coating film characteristic measurement results F₁, and test conditions B₂ and coating film characteristic measurement results F₂ in a case where the paint formulation is C₁ and the coating film characteristic measurement conditions are E₁. The dataset includes a difference ΔB in the test conditions and a difference ΔF in the coating film characteristic measurement results. Here, ΔB and ΔF are a difference between B₁ and B₂ and a difference between F₁ and F₂, respectively.

The machine learning model generation unit 120 according to the second embodiment generates a machine learning model that outputs, when a paint formulation, coating film characteristic measurement conditions, first test conditions, a difference between the first test conditions and second test conditions, and first coating film characteristic measurement results corresponding to the first test conditions are input, second coating film characteristic measurement results corresponding to the second test conditions. The first test conditions and the second test conditions are different test conditions.

Using the dataset shown in FIG. 5 for the description, the machine learning model generation unit 120 according to the second embodiment generates a machine learning model that outputs F₂ when C₁, E₁, B₁, ΔB, and F₁ are input.

The machine learning model generation unit 120 according to the second embodiment may generate a machine learning model that outputs, when a paint formulation, coating film characteristic measurement conditions, first test conditions, a difference between the first test conditions and second test conditions, and first coating film characteristic measurement results corresponding to the first test conditions are input, a difference between second coating film characteristic measurement results and the first coating film characteristic measurement results.

Using the dataset shown in FIG. 5 for the description, the machine learning model generation unit 120 according to the second embodiment may generate a machine learning model that outputs ΔF when C₁, E₁, B₁, ΔB, and F₁ are input.

Hereinafter, the coating film characteristic estimation device 20 according to the second embodiment will be described. The coating data acquisition unit 210 according to the second embodiment acquires a paint formulation, coating film characteristic measurement conditions, known coating film characteristic measurement results, known test conditions, and a difference between the known test conditions and unknown test conditions. Here, the known coating film characteristic measurement results are coating film characteristic measurement results under the conditions of the paint formulation, the coating film characteristic measurement conditions, and the known test conditions acquired by the coating data acquisition unit 210. The known coating film characteristic measurement results are acquired in advance in the same manner as the dataset.

The unknown test conditions are test conditions in which the coating film characteristic measurement results are unknown under the conditions of the paint formulation and the coating film characteristic measurement conditions acquired by the coating data acquisition unit 210 and the known test conditions. Hereinafter, the coating film characteristic measurement results under the conditions of the paint formulation, the coating film characteristic measurement conditions, and the unknown test conditions acquired by the coating data acquisition unit 210 are referred to as unknown coating film characteristic measurement results.

The coating film characteristic measurement result estimation unit 220 according to the second embodiment causes the machine learning model generated by the machine learning model generation unit according to the second embodiment to output an estimated value of the unknown coating film characteristic measurement results by inputting, to the machine learning model, the paint formulation, the coating film characteristic measurement conditions, the known test conditions, the difference between the known test conditions and the unknown test conditions, and the known coating film characteristic measurement results.

The coating film characteristic measurement result estimation unit 220 according to the second embodiment may cause the machine learning model generated by the machine learning model generation unit according to the second embodiment to output an estimated value of a difference between the known coating film characteristic measurement results and the estimated value of the unknown coating film characteristic measurement results by inputting, to the machine learning model, the paint formulation, the coating film characteristic measurement conditions, the known test conditions, the difference between the known test conditions and the unknown test conditions, and the known coating film characteristic measurement results.

### <Third Embodiment>

Hereinafter, the coating film characteristic estimation model generation device 10 according to the third embodiment will be described. In the third embodiment, a dataset acquired by the dataset acquisition unit 110 includes, in addition to the dataset in the first embodiment, a difference in test conditions and a difference in coating film characteristic measurement results corresponding to the difference in test conditions in a case where the paint formulation and the coating film characteristic measurement conditions are the same. FIG. 5 is a diagram showing the dataset in the third embodiment. Since the description of the symbols in FIG. 5 is the same as that in the second embodiment, the description thereof will be omitted.

The machine learning model generation unit 120 according to the third embodiment generates a machine learning model that outputs, when a paint formulation, coating film characteristic measurement conditions, second test conditions, a difference between the second test conditions and first test conditions, and first coating film characteristic measurement results corresponding to the first test conditions are input, second coating film characteristic measurement results corresponding to the second test conditions. The first test conditions and the second test conditions are different test conditions.

Using the dataset shown in FIG. 5 for the description, the machine learning model generation unit 120 according to the third embodiment generates a machine learning model that outputs F₂ when C₁, E₁, B₂, ΔB, and F₁ are input.

The machine learning model generation unit 120 according to the third embodiment may generate a machine learning model that outputs, when a paint formulation, coating film characteristic measurement conditions, second test conditions, a difference between the second test conditions and first test conditions, and first coating film characteristic measurement results are input, a difference between second coating film characteristic measurement results and the first coating film characteristic measurement results.

Using the dataset shown in FIG. 5 for the description, the machine learning model generation unit 120 according to the third embodiment may generate a machine learning model that outputs ΔF when C₁, E₁, B₂, ΔB, and F₁ are input.

Hereinafter, the coating film characteristic estimation device 20 according to the third embodiment will be described. The coating data acquisition unit 210 according to the third embodiment acquires a paint formulation, coating film characteristic measurement conditions, unknown test conditions, a difference between the unknown test conditions and known test conditions, and known coating film characteristic measurement results.

The coating film characteristic measurement result estimation unit 220 according to the third embodiment causes the machine learning model generated by the machine learning model generation unit according to the third embodiment to output an estimated value of unknown coating film characteristic measurement results by inputting, to the machine learning model, the paint formulation, the coating film characteristic measurement conditions, the unknown test conditions, the difference between the unknown test conditions and the known test conditions, and the known coating film characteristic measurement results.

The coating film characteristic measurement result estimation unit 220 according to the third embodiment may cause the machine learning model generated by the machine learning model generation unit according to the third embodiment to output a difference between the known coating film characteristic measurement results and the estimated value of the unknown coating film characteristic measurement results by inputting, to the machine learning model, the paint formulation, the coating film characteristic measurement conditions, the unknown test conditions, the difference between the unknown test conditions and the known test conditions, and the known coating film characteristic measurement results.

### <Fourth Embodiment>

Hereinafter, the coating film characteristic estimation device 20 according to a fourth embodiment will be described. The coating film characteristic estimation device 20 according to the fourth embodiment calculates an estimated value of the second coating film characteristic measurement results by using both the machine learning model according to the second embodiment and the machine learning model according to the third embodiment.

The coating film characteristic measurement result estimation unit 220 according to the fourth embodiment causes the machine learning model according to the second embodiment to output an estimated value of the unknown coating film characteristic measurement results (hereinafter, referred to as a second estimated value) by inputting, to the machine learning model, the paint formulation, the coating film characteristic measurement conditions, the known test conditions, the difference between the known test conditions and the unknown test conditions, and the known coating film characteristic measurement results.

In addition, the coating film characteristic measurement result estimation unit 220 according to the fourth embodiment causes the machine learning model according to the third embodiment to output an estimated value of the unknown coating film characteristic measurement results (hereinafter, referred to as a third estimated value) by inputting, to the machine learning model, the paint formulation, the coating film characteristic measurement conditions, the unknown test conditions, the difference between the unknown test conditions and the known test conditions, and the known coating film characteristic measurement results.

The coating film characteristic measurement result estimation unit 220 according to the fourth embodiment calculates the estimated value of the unknown coating film characteristic measurement results based on the second estimated value and the third estimated value. For example, the coating film characteristic measurement result estimation unit 220 according to the fourth embodiment calculates an average value of the second estimated value and the third estimated value as the estimated value of the unknown coating film characteristic measurement results.

The coating film characteristic measurement result estimation unit 220 according to the fourth embodiment may cause the machine learning model according to the second embodiment to output a difference between the known coating film characteristic measurement results and the estimated value of the unknown coating film characteristic measurement results (hereinafter, referred to as a second difference estimated value) by inputting, to the machine learning model, the paint formulation, the coating film characteristic measurement conditions, the known test conditions, the difference between the known test conditions and the unknown test conditions, and the known coating film characteristic measurement results.

In addition, the coating film characteristic measurement result estimation unit 220 according to the fourth embodiment may cause the machine learning model according to the third embodiment to output a difference between the known coating film characteristic measurement results and the estimated value of the unknown coating film characteristic measurement results (hereinafter, referred to as a third difference estimated value) by inputting, to the machine learning model, the paint formulation, the coating film characteristic measurement conditions, the unknown test conditions, the difference between the unknown test conditions and the known test conditions, and the known coating film characteristic measurement results.

The coating film characteristic measurement result estimation unit 220 according to the fourth embodiment calculates an estimated value of the difference between the known coating film characteristic measurement results and the unknown coating film characteristic measurement results based on the second difference estimated value and the third difference estimated value. For example, the coating film characteristic measurement result estimation unit 220 according to the fourth embodiment may calculate an average value of the second difference estimated value and the third difference estimated value as the estimated value of the difference between the known coating film characteristic measurement results and the unknown coating film characteristic measurement results.

In the second to fourth embodiments, the coating film characteristic measurement result estimation unit 220 may calculate a correction value for the estimated value of the unknown coating film characteristic measurement results or a correction value for the difference between the known coating film characteristic measurement results and the estimated value of the unknown coating film characteristic measurement results, and may correct the difference between the known coating film characteristic measurement results and the estimated value of the unknown coating film characteristic measurement results or the estimated value of the unknown coating film characteristic measurement results.

In the second to fourth embodiments, the coating film characteristic measurement result estimation unit 220 causes the machine learning model to output the estimated value of the known coating film characteristic measurement results by inputting, to the machine learning model, the paint formulation, the coating film characteristic measurement conditions, the known test conditions, and the known coating film characteristic measurement results. In this case, the coating film characteristic measurement result estimation unit 220 inputs 0 as the difference in the test conditions.

In the second to fourth embodiments, the coating film characteristic measurement result estimation unit 220 calculates a correction value based on the known coating film characteristic measurement results and the estimated value of the known coating film characteristic measurement results. The coating film characteristic measurement result estimation unit 220 calculates, for example, a difference between the known coating film characteristic measurement results and the estimated value of the known coating film characteristic measurement results as the correction value.

### <Other Embodiments>

Although the embodiments of the present invention have been described in detail with reference to the accompanying drawings, the specific configuration is not limited to the above-described configurations, and various design changes and the like can be made without departing from the gist of the present invention.

All or a part of the functions of the coating film characteristic estimation model generation device 10 and the coating film characteristic estimation device 20 in the above-described embodiment may be implemented by a computer. In such a case, a program for implementing the function may be recorded on a computer-readable recording medium, and the program recorded on the recording medium may be read into a computer system and executed to implement the function. The term "computer system" includes an OS or hardware such as a peripheral device. In addition, the term "computer-readable recording medium" refers to a portable medium such as a flexible disk, a magneto-optical disk, a ROM, or a CD-ROM, or a storage device such as a hard disk built in the computer system. Further, the term "computer-readable recording medium" may also include a medium that dynamically holds a program for a short period of time, such as a communication line in a case of transmitting a program via a network such as the Internet or a communication line such as a telephone line, or a medium that holds a program for a certain period of time, such as a volatile memory inside a computer system that is a server or a client in such a case. In addition, the above-described program may be a program for realizing a part of the above-described functions, and the above-described functions may be realized in combination with a program that has already been recorded in the computer system. In addition, all or a part of the functions of the coating film characteristic estimation model generation device 10 and the coating film characteristic estimation device 20 may be implemented using a programmable logic device such as a field programmable gate array (FPGA).

### INDUSTRIAL APPLICABILITY

According to the present invention, it is possible to estimate coating film characteristics before coating is performed.

### REFERENCE SIGNS LIST

10 Coating film characteristic estimation model generation device
110 Dataset acquisition unit
120 Machine learning model generation unit
130 Machine learning model output unit
20 Coating film characteristic estimation device
210 Coating data acquisition unit
220 Coating film characteristic measurement result estimation unit
230 Coating film characteristic measurement result output unit
290 Storage unit

## Claims

1. A coating film characteristic estimation method comprising:
using a machine learning model that has been trained with variables including information on coating conditions, paint properties, a paint formulation, coating film characteristic measurement conditions, and coating film characteristic measurement results, to cause the machine learning model to output an estimated value of the coating film characteristic measurement results by inputting, to the machine learning model, the information on the coating conditions, the paint properties, the paint formulation, and the coating film characteristic measurement conditions.

2. The coating film characteristic estimation method according to Claim 1,
wherein the variables include information on a difference in test conditions including the coating conditions and the paint properties and a difference in the coating film characteristic measurement results corresponding to the difference in the test conditions in a case where the paint formulation and the coating film characteristic measurement conditions are the same, and
the coating film characteristic estimation method further comprises:
inputting, to the machine learning model, information on first test conditions, a difference between the first test conditions and second test conditions, the second test conditions being test conditions different from the first test conditions, the paint formulation, the coating film characteristic measurement conditions, and first coating film characteristic measurement results corresponding to the first test conditions, to cause the machine learning model to output an estimated value of second coating film characteristic measurement results corresponding to the second test conditions and/or a difference between the first coating film characteristic measurement results and the estimated value of the second coating film characteristic measurement results.

3. The coating film characteristic estimation method according to Claim 1,
wherein the variables include information on a difference in test conditions including the coating conditions and the paint properties and a difference in the coating film characteristic measurement results corresponding to the difference in the test conditions in a case where the paint formulation and the coating film characteristic measurement conditions are the same, and
the coating film characteristic estimation method further comprises:
inputting, to the machine learning model, information on second test conditions, a difference between the second test conditions and first test conditions, the first test conditions being test conditions different from the second test conditions, the paint formulation, the coating film characteristic measurement conditions, and first coating film characteristic measurement results corresponding to the first test conditions, to cause the machine learning model to output an estimated value of second coating film characteristic measurement results corresponding to the second test conditions and/or a difference between the estimated value of the second coating film characteristic measurement results and the first coating film characteristic measurement results.

4. The coating film characteristic estimation method according to Claim 2, further comprising:
inputting, to the machine learning model, the information on the second test conditions, the difference between the first test conditions and the second test conditions, the paint formulation, the coating film characteristic measurement conditions, and the first coating film characteristic measurement results, to cause the machine learning model to output the estimated value of the second coating film characteristic measurement results and/or the difference between the first coating film characteristic measurement results and the estimated value of the second coating film characteristic measurement results; and
calculating the estimated value of the second coating film characteristic measurement results and/or the difference between the first coating film characteristic measurement results and the estimated value of the second coating film characteristic measurement results based on the estimated value of the second coating film characteristic measurement results and/or the difference between the first coating film characteristic measurement results and the estimated value of the second coating film characteristic measurement results output by the machine learning model by inputting the first test conditions, and the estimated value of the second coating film characteristic measurement results and/or the difference between the first coating film characteristic measurement results, and the estimated value of the second coating film characteristic measurement results output by the machine learning model by inputting the second test conditions.

5. The coating film characteristic estimation method according to any one of Claims 2 to 4, further comprising:
inputting, to the machine learning model, the information on the first test conditions, the paint formulation, the coating film characteristic measurement conditions, and the first coating film characteristic measurement results, to cause the machine learning model to output an estimated value of the first coating film characteristic measurement results corresponding to the first test conditions;
calculating a correction value based on the first coating film characteristic measurement results and the estimated value of the first coating film characteristic measurement results; and
correcting the estimated value of the second coating film characteristic measurement results and/or the difference between the first coating film characteristic measurement results and the estimated value of the second coating film characteristic measurement results using the correction value.

6. The coating film characteristic estimation method according to any one of Claims 1 to 4,
wherein the coating film characteristics include at least one of smoothness, gloss, and color.

7. The coating film characteristic estimation method according to any one of Claims 1 to 4,
wherein the coating conditions include at least one selected from the group consisting of coating booth temperature and humidity, a discharge rate, a gun speed, a film thickness, and baking conditions, which vary depending on a coating process.

8. The coating film characteristic estimation method according to any one of Claims 1 to 4,
wherein the paint properties include at least one of a viscosity and a solid content concentration.

9. The coating film characteristic estimation method according to any one of Claims 1 to 4,
wherein the paint formulation includes at least one of a size of an effect pigment, a color of the effect pigment, a color of a coloring pigment, and a chemical structure of the coloring pigment.

10. A coating film characteristic estimation model generation method comprising:
acquiring, as variables, information on coating conditions, paint properties, a paint formulation, coating film characteristic measurement conditions, and coating film characteristic measurement results; and
generating, using the variables, a machine learning model that outputs an estimated value of the coating film characteristic measurement results when the information on the coating conditions, the paint properties, the paint formulation, and the coating film characteristic measurement conditions is input.

11. The coating film characteristic estimation model generation method according to Claim 10,
wherein the variables include information on a difference in test conditions including the coating conditions and the paint properties and a difference in the coating film characteristic measurement results corresponding to the difference in the test conditions in a case where the paint formulation and the coating film characteristic measurement conditions are the same, and
the coating film characteristic estimation model generation method further comprises:
inputting information on first test conditions, a difference between the first test conditions and second test conditions, the second test conditions being test conditions different from the first test conditions, the paint formulation, the coating film characteristic measurement conditions, and first coating film characteristic measurement results corresponding to the first test conditions, to generate a machine learning model that outputs an estimated value of second coating film characteristic measurement results corresponding to the second test conditions and/or a difference between the first coating film characteristic measurement results and the estimated value of the second coating film characteristic measurement results.

12. The coating film characteristic estimation model generation method according to Claim 10,
wherein the variables include information on a difference in test conditions including the coating conditions and the paint properties and a difference in the coating film characteristic measurement results corresponding to the difference in the test conditions in a case where the paint formulation and the coating film characteristic measurement conditions are the same, and
the coating film characteristic estimation model generation method further comprises:
inputting information on second test conditions, a difference between the second test conditions and first test conditions, the first test conditions being test conditions different from the second test conditions, the paint formulation, the coating film characteristic measurement conditions, and first coating film characteristic measurement results corresponding to the first test conditions, to generate a machine learning model that outputs an estimated value of second coating film characteristic measurement results corresponding to the second test conditions and/or a difference between the estimated value of the second coating film characteristic measurement results and the first coating film characteristic measurement results.
